# FASCICULE DE BREVET EUROPEEN

(11) **EP 2 790 894 B1**
(45) Date de publication et mention de la délivrance du brevet: **19.08.2015**
(21) Numéro de dépôt: 12791798.7
(22) Date de dépôt: 30.11.2012
(51) Int. Cl.: B29C 59/14, H05H 1/26

(54) **DISPOSITIF ROBOTISÉ DE PRÉPARATION DE SURFACE PAR PLASMA D'UNE PIÈCE THERMOPLASTIQUE**
AUTOMATISIERTE VORRICHTUNG ZUR PLASMAOBERFLÄCHENBEARBEITUNG EINES WÄRMEHÄRTENDEN TEILS
AUTOMATED DEVICE FOR PLASMA SURFACE PREPARATION OF A THERMOPLASTIC PART

(30) Priorité: 15.12.2011 FR 1161686
(43) Date de publication de la demande: 22.10.2014
(73) Titulaire: Renault S.A.S., 92100 Boulogne-Billancourt (FR)
(72) Inventeur: KERBIGUET, Jean-gilles, F-78150 Le Chesnay (FR); POLLET, Thomas, F-78960 Voisins Le Bretonneux (FR)
(86) Numéro de dépôt international: PCT/EP2012/074040
(87) Numéro de publication internationale: WO 2013/087422

(56) Documents cités:
- US-A1- 2006 076 715
- US-A1- 2008 134 970
- US-B1- 6 222 154

## Description

La présente invention concerne un dispositif robotisé de préparation de surface par plasma d'une pièce thermoplastique, selon la revendication 1, notamment dans le cadre de la préparation de surface des zones d'encollage de pièces thermoplastiques utilisées dans l'industrie automobile.

Pour la préparation de surface par plasma des thermoplastiques (zone d'encollage) robotisé, il convient de maîtriser de façon précise la distance entre l'embout de torche à plasma et la surface de la pièce à traiter pour garantir une bonne tension de surface qui est un préalable indispensable à la bonne adhésion de l'apprêt et de la colle sur ce type de matériau. Or, dans le cadre d'une solution automatisée consistant à embarquer la pièce à traiter sur un robot de manutention et de la passer à grande vitesse sous la torche plasma, les risques de dispersion liés à ce type de process robotisé sont importants.

Le document US 2008/0134970 A1 décrit un dispositif robotisé de préparation de surface par plasma d'une pièce thermoplastique selon le préambule de la revendication 1.

Le but de l'invention est de résoudre ce problème et de mettre en oeuvre des solutions de contrôle/mesure en dynamique lorsque les tolérances de dispersion sont très serrées et que le process ne permet pas de les respecter et/ou que le matériau à traiter le nécessite.

L'invention atteint son but grâce à un dispositif robotisé de préparation de surface par plasma d'une pièce thermoplastique comportant d'une part des premiers moyens de support d'une pièce thermoplastique et d'autre part des seconds moyens de support d'une torche plasma à embout cylindrique rotatif, les premiers et/ou les seconds moyens de support étant mobiles de manière que la torche et la pièce aient un mouvement relatif permettant à la torche de parcourir une zone de traitement de la pièce, le dispositif comportant sur la torche plasma des moyens de contrôle de la distance entre l'embout de la torche et la pièce, caractérisé en ce que les moyens de contrôle comportent une pige disposée axialement sur l'embout de la torche à plasma, ce qui permet une solution mécanique simple, avantageusement associée à des moyens de contreréaction mentionnés plus bas pour garantir l'appui de la pige sur la pièce, en ce que le dispositif comporte un chariot mobile dans le sens de l'axe de la torche interposé entre la torche mobile et les seconds moyens de support (notamment une potence) et en ce que le chariot mobile comporte des moyens de contreréaction à un déplacement autour d'une position d'équilibre ou de butée, de manière à rappeler le chariot, et donc la torche, vers cette position d'équilibre ou de butée.

Grâce à ces moyens, il est possible de maîtriser la distance entre l'outil et la pièce en dynamique et/ou de contrôler en ligne 100% des pièces pour garantir une bonne qualité de préparation, de faciliter la mise au point et de prévenir et corriger les éventuelles dérives en production.

Selon d'autres caractéristiques de l'invention, prises seules ou en combinaison :
- les premiers moyens de support (ou les seconds moyens de support) sont constitués par un robot de manutention, notamment avec bras articulé.
- les seconds moyens de support (ou les premiers moyens de support) sont constitués d'une potence fixe,
- le chariot mobile comporte des moyens motorisés de déplacement de la torche dans le sens de son axe, ce qui permet dans certains modes de réalisation de corriger en temps réel les dérives éventuelles constatées par la mesure de distance entre la torche et la pièce,
- les moyens de contrôle comportent une pige disposée axialement sur l'embout de la torche à plasma,
- la pige comporte à son extrémité une bille encagée, de manière à ne pas marquer la pièce qu'elle parcourt et sur laquelle l'embout de torche est en rotation permanente, une telle pige pouvant être montée par vissage ou encliquetage démontable dans l'embout de torche, ce qui permet de choisir une pige de longueur adaptée et d'en changer à volonté.

D'autres caractéristiques et avantages de l'invention ressortiront de la description suivante d'un exemple de réalisation. Il sera fait référence aux dessins annexés sur lesquels :
La figure 1 est une vue schématique d'un dispositif conforme à l'invention.
La figure 2 est une vue agrandie du détail A de la figure 1.
La figure 3 est une vue détaillée de la torche à plasma du dispositif de l'invention, équipée d'un premier mode de réalisation du système de contrôle de distance.
La figure 4 est une vue de détail du montage du système de contrôle de distance à l'extrémité de la torche à plasma.
La figure 5 est une vue détaillée de la torche à plasma du dispositif de l'invention, équipée d'un second mode de réalisation du système de contrôle de distance, selon deux variantes B et C représentées plus en détail sur les figures 6 et 7 respectivement.

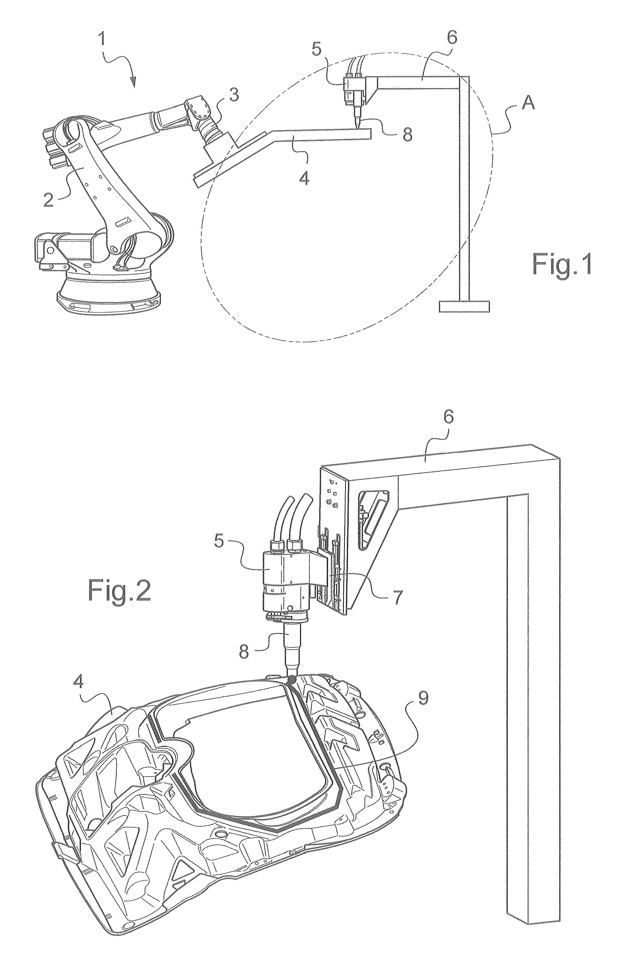

Les figures 1 et 2 représentent le dispositif robotisé de traitement de surface 1 ; il comprend :
- d'une part un robot de manutention 2 dont l'extrémité d'un bras articulé 3 porte une pièce de travail 4, par exemple une pièce de véhicule automobile en matière thermoplastique moulée, en l'occurrence dans l'application représentée un hayon thermoplastique ;
- et d'autre part une torche plasma verticale 5 portée à l'extrémité d'une potence 6, par exemple fixée au sol, par l'intermédiaire d'un chariot coulissant selon l'axe de la torche plasma 5, ici verticalement, et centré sur une position d'équilibre.

L'embout 8 de la torche 5 dirige sur la pièce 4 un jet plasma qui érode la pièce le long d'une piste 9 définie sur la pièce 4 par le mouvement du robot de manutention 2 (on pourrait avoir la disposition inverse naturellement, avec une pièce fixe et une torche portée par le robot de manutention). Dans l'application visée, cette piste 9 correspond à la zone d'encollage de la lunette sur le hayon thermoplastique 4. L'embout 8 de la torche 5 est cylindrique et en rotation sur son axe vertical.

L'invention vise à prévoir sur ce dispositif robotisé des moyens de contrôle de la distance entre l'embout 8 de la torche 5 et la pièce 4, et cela pendant le processus de travail dynamique à grande vitesse.

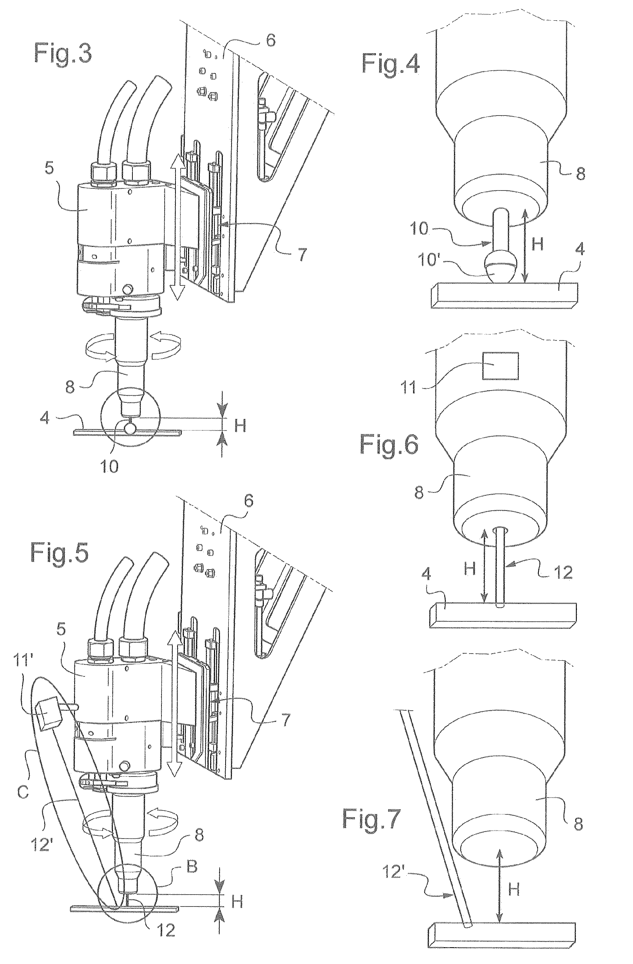

Selon une première solution représentée sur les figures 4 et 5, on prévoit à l'extrémité inférieure de l'embout 8 une pige 10 coaxiale à l'embout 8, de préférence démontable : elle peut par exemple être vissable dans l'extrémité de l'embout 8. Cette pige 10 permet de maintenir une distance H avec la pièce 4 et donc de s'affranchir des problèmes de dispersion puisque la pige en contact avec la pièce absorbera les dispersions de la trajectoire via le chariot mobile 7 auquel on peut adjoindre une contreréaction si nécessaire pour éviter la perte de contact de la pige 10 liée à la torche 5 lors du parcours de la pièce 4 sous la torche 5 (vibration sous l'effet du frottement). La pige 10 peut au besoin être équipée d'une bille encagée 10' pour éviter de rayer la pièce 4 du fait de la rotation de la torche 5 et de la translation de la pièce 4 sous la pige (voir figure 4). La pige 10 étant démontable, elle est interchangeable et flexible en termes de hauteur ou pour des questions d'usure et elle peut être dimensionnée pour s'adapter à n'importe quelle hauteur nécessaire de travail H.

Selon un second mode de réalisation des moyens de contrôle de la distance H entre l'embout 8 de torche et la pièce 4, on intègre en lieu et place de la pige 10 un capteur laser 11, ou comparateur, qui envoie un rayon 12 sur la pièce 4 et mesure le rayon réfléchi de manière à calculer et enregistrer en dynamique la distance H entre la torche 5 et la pièce 4, avec ou sans le système de chariot mobile 7 selon que l'on souhaite corriger ou non en temps réel la distance entre la torche 5 et la pièce 4. Si l'on souhaite corriger en temps réel, on motorise le chariot 7 et on l'asservit via une interface électromécanique afin que la consigne du capteur soit traitée et que le chariot mobile motorisé 7 corrige la position de la torche 5. Si l'on ne peut ou ne souhaite pas corriger cette distance en temps réel, le chariot mobile 7 n'est pas nécessaire. Dans les deux cas de figure, ce qui est intéressant, c'est le fait de pouvoir faire de la télémétrie en enregistrant en dynamique la position de la torche 5 par rapport à la pièce 4 et de ce fait, définir une plage de tolérance et faire un contrôle de process en continu et ainsi délimiter une plage de tolérance.

Selon une variante de cette solution, au lieu d'intégrer le capteur laser 11 coaxialement dans la torche plasma, on prévoit un capteur laser 11' déporté de la torche plasma 5 et de son axe, qui peut donc être mis en oeuvre de façon plus simple. Le rayon laser 12' est oblique mais le point de visée laser ne se trouve pas dans l'axe de travail de la torche 5 et n'a qu'une valeur d'indication d'écart de trajectoire. Il n'est donc pas intéressant dans cette configuration d'asservir une correction électromécanique de position torche/pièce via le chariot mobile 7, mais cela peut convenir malgré tout pour faire du contrôle de position en ligne.

Il est naturellement possible et même opportun de mixer les solutions précédentes. On peut notamment coupler d'une part une solution purement mécanique simple avec la pige 10 garantissant la maitrise de distance entre torche 5 et pièce 4 et dont les dispersions se corrigeraient naturellement de part le principe mécanique de suivi de joint, et d'autre part la solution de contrôle en ligne, avec le capteur 11', du process de préparation de surface plasma.

## Revendications

1. Dispositif robotisé (1) de préparation de surface par plasma d'une pièce thermoplastique (4) comportant d'une part des premiers moyens de support (2) d'une pièce thermoplastique et d'autre part des seconds moyens de support (6) d'une torche plasma (5) à embout cylindrique rotatif (8), les premiers et/ou les seconds moyens de support (2, 6) étant mobiles de manière que la torche (5) et la pièce (4) aient un mouvement relatif permettant à la torche (5) de parcourir une zone de traitement (9) de la pièce (4), le dispositif comportant sur la torche plasma (5) des moyens (10, 11, 11') de contrôle de la distance entre l'embout (8) de la torche (5) et la pièce (4), **caractérisé en ce que** les moyens de contrôle (10) comportent une pige disposée axialement sur l'embout (8) de la torche (5) à plasma, **en ce que** le dispositif comporte un chariot mobile (7) dans le sens de l'axe de la torche (5) interposé entre la torche mobile (5) et les seconds moyens de support (6) **et en ce que** le chariot mobile (7) comporte des moyens de contreréaction à un déplacement autour d'une position d'équilibre ou de butée.

2. Dispositif selon la revendication 1, **caractérisé en ce que** les premiers moyens de support (2) sont constitués par un robot de manutention.

3. Dispositif selon la revendication 1 ou 2, **caractérisé en ce que** les seconds moyens de support (6) sont constitués d'une potence fixe.

4. Dispositif selon l'une quelconque des revendications 1 à 3, **caractérisé en ce que** le chariot mobile (7) comporte des moyens motorisés de déplacement de la torche (5) dans le sens de son axe.

5. Dispositif selon l'une quelconque des revendications 1 à 4, **caractérisé en ce que** la pige comporte à son extrémité une bille encagée (10').

## Patentansprüche

1. Automatisierte Vorrichtung (1) zur Oberflächenbearbeitung mit Plasma eines thermoplastischen Teils (4), die einerseits erste Trägermittel (2) eines thermoplastischen Teils und andererseits zweite Trägermittel (6) eines Plasmabrenners (5) mit einem rotierenden zylindrischen Ansatzstück (8) umfasst, wobei die ersten und/oder die zweiten Trägermittel (2, 6) dergestalt beweglich sind, dass der Brenner (5) und das Teil (4) eine relative Bewegung aufweisen, die es dem Brenner (5) ermöglicht, eine Behandlungszone (9) des Teils (4) zu durchlaufen, wobei die Vorrichtung an dem Plasmabrenner (5) Mittel (10, 11, 11') zum Steuern der Distanz zwischen dem Ansatzstück (8) des Brenners (5) und dem Teil (4) umfasst, **dadurch gekennzeichnet, dass** die Steuermittel (10) eine Messeinrichtung umfassen, die axial an dem Ansatzstück (8) des Plasmabrenners (5) angeordnet ist, dadurch, dass die Vorrichtung einen in Richtung der Achse des Brenners (5) beweglichen Wagen (7) umfasst, der zwischen dem beweglichen Brenner (5) und den zweiten Trägermitteln (6) angeordnet ist, und dadurch, dass der bewegliche Wagen (7) Gegenreaktionsmittel zu einer Verschiebung um eine Gleichgewichtsstellung oder eine Anschlagsstellung umfasst.

2. Vorrichtung nach Anspruch 1, **dadurch gekennzeichnet, dass** die ersten Trägermittel (2) aus einem Handhabungsroboter bestehen.

3. Vorrichtung nach Anspruch 1 oder 2, **dadurch gekennzeichnet, dass** die zweiten Trägermittel (6) aus einem feststehenden Ausleger bestehen.

4. Vorrichtung nach irgendeinem der Ansprüche 1 bis 3, **dadurch gekennzeichnet, dass** der bewegliche Wagen (7) motorisierte Mittel zum Bewegen des Brenners (5) in die Richtung seiner Achse umfasst.

5. Vorrichtung nach irgendeinem der Ansprüche 1 bis 4, **dadurch gekennzeichnet, dass** die Messeinrichtung an ihrem Ende eine in einem Käfig gefangene Kugel (10') umfasst.

## Claims

1. Robotic device (1) for preparing a surface of a thermoplastic part (4) with plasma, this device comprising, on the one hand, first means (2) for holding a thermoplastic part and, on the other hand, second means (6) for holding a plasma torch (5) having a rotary cylindrical end-fitting (8), the first and/or second holding means (2, 6) being movable so that the torch (5) and the part (4) have a relative movement allowing the torch (5) to travel over a treatment zone (9) of the part (4), the device comprising, on the plasma torch (5), means (10, 11, 11') for controlling the distance between the end-fitting (8) of the torch (5) and the part (4), **characterized in that** the controlling means (10) comprise a rod placed axially on the end-fitting (8) of the plasma torch (5), **in that** the device comprises a carriage (7) that is movable in the direction of the axis of the torch (5), which carriage is interposed between the movable torch (5) and the second holding means (6), **and in that** the movable carriage (7) comprises means for producing a counter-reaction to a movement about a position of equilibrium or abutment.

2. Device according to Claim 1, **characterized in that** the first holding means (2) consist of a handling robot.

3. Device according to Claim 1 or 2, **characterized in that** the second holding means (6) consist of a fixed scaffold.

4. Device according to any one of Claims 1 to 3, **characterized in that** the movable carriage (7) comprises motorized means for moving the torch (5) in the direction of its axis.

5. Device according to any one of Claims 1 to 4, **characterized in that** the rod comprises a caged ball (10') at its end.
